# EUROPÄISCHE PATENTSCHRIFT

(11) **EP 4 036 048 B1**
(45) Veröffentlichungstag und Bekanntmachung des Hinweises auf die Patenterteilung: **20.08.2025**
(21) Anmeldenummer: 22153283.1
(22) Anmeldetag: 25.01.2022
(51) Int. Cl.: B66C 23/62, B66C 23/78, E02D 27/44, E04G 21/32, F16M 9/00

(54) **MOBILES FUNDAMENT FÜR TURMDREHKRANE UND SCHNELLBAUKRANE**
MOBILE FOUNDATION FOR TOWER CRANE AND FAST CONSTRUCTION CRANE
FONDATION MOBILE POUR GRUES À TOUR ET GRUES À CONSTRUCTION RAPIDE

(30) Priorität: 01.02.2021 AT 500612021
(43) Veröffentlichungstag der Anmeldung: 03.08.2022
(73) Patentinhaber: Kainzmayer, Thomas, 2511 Pfaffstätten (AT)
(72) Erfinder: Kainzmayer, Thomas, 2511 Pfaffstätten (AT)
(74) Vertreter: Margotti, Herwig Franz

(56) Entgegenhaltungen:
- EP-A1- 2 481 853
- CN-A- 108 729 465
- US-A1- 2012 255 256

## Beschreibung

Die Erfindung betrifft ein mobiles Fundament für Turmdrehkrane und Schnellbaukrane Eine derartige Vorrichtung ist aus der CN111663558A bekannt.

Derzeit müssen für die temporäre Errichtung von Turmdrehkranen und Schnellbaukranen Betonfundamente gegossen werden, um über Fundamentanker oder Fundamentkreuze die Kräfte des Kranes gleichmäßig auf den Untergrund zu verteilen. Diese Betonfundamente müssen nach Fertigstellung der Baustelle und Abbau des Krans zerstört, verladen, abtransportiert und entsorgt werden.

Diese Art der Errichtung von Kranfundamenten ist sowohl unwirtschaftlich als auch ökologisch äußerst fragwürdig, wenn man bedenkt, dass die Herstellung von 1 m³ Beton mit ca. 1000 kg CO₂ Belastung für die Umwelt verbunden ist und die Fundamentplatte eines mittelgroßen Kranes typischerweise aus 20-40 m³ Stahlbeton besteht und nur einmal verwendbar ist.

Weiters werden durch die Fundamentplatte und die Fundamentanker Gehsteige und Straßenteile beschädigt, die nach der zerstörenden Entfernung des Betonfundaments wiederinstandgesetzt werden müssen.

Ein weiterer Nachteil herkömmlicher Kranfundamente aus Beton besteht darin, dass die Betonfundamente Höhen von 75-150 cm erfordern, um die nötige Festigkeit und Verteilung der Kranlasten zu gewähren. Solch hohe Betonfundamente versperren aber die Gehsteige, d.h. der Fußgängerverkehr muss auf die Straße oder die gegenüberliegende Straßenseite verlagert werden. Auch der Fahrzeugverkehr wird durch notwendige Fahrspurverengungen oder Fahrspurschließungen beeinträchtigt.

Es ist die Aufgabe der vorliegenden Erfindung, die beschriebenen Nachteile der bekannten Kranfundamente aus Beton zu überwinden. Insbesondere ist es die Aufgabe der vorliegenden Erfindung, auf die herkömmlichen Betonfundamente, Fundamentanker bzw. Fundamentkreuze verzichten zu können.

Die Erfindung löst die gestellte Aufgabe durch Bereitstellen eines mobilen Fundaments für Turmdrehkrane und Schnellbaukrane mit den Merkmalen des Anspruchs 1. Vorteilhafte Ausführungsformen der Erfindung sind in den Unteransprüchen, der Beschreibung und den Zeichnungen dargelegt.

Das erfindungsgemäße mobile Fundament für Turmdrehkrane und Schnellbaukrane zeichnet sich durch zumindest zwei Bodenelemente aus Metall aus, die miteinander lösbar verbindbar, insbesondere miteinander verschraubbar sind, wobei die Bodenelemente Verankerungsvorrichtungen für einen Kranturm aufweisen.

Durch die modulare Bauweise des Fundaments sind die Bodenelemente klein und leicht genug, um mittels LKW zur Baustelle gebracht und dort miteinander verbunden zu werden, um die nötige Auflagefläche für einen Kran bereitzustellen. Die Anlieferung der modularen Bestandteile des Fundaments kann zusammen mit der Anlieferung der Kranteile zur Baustelle erfolgen, wodurch kein zusätzlicher Transport erforderlich ist.

Die Wiederverwendbarkeit aller Teile des erfindungsgemäßen Fundaments verringert die Kosten gegenüber den nur einmal verwendbaren, herkömmlichen Betonfundamenten enorm.

Bevorzugt sind die Bodenelemente an ihren Seitenwänden miteinander verbindbar, indem die Seitenwände Durchgangslöcher für Schrauben aufweisen, wobei die Positionen der Durchgangslöcher in den Seitenwänden der Bodenelemente einander entsprechen. Dadurch können die Bodenelemente Seite-an-Seite angeordnet werden und die Durchgangslöcher in den Seitenwänden der Bodenelemente miteinander in Ausrichtung gebracht werden. Anschließend werden die Bodenelemente durch Schrauben und Muttern miteinander verbunden.

Um Bodenelemente mit geringem Gewicht, aber hoher Festigkeit und Steifigkeit bereitzustellen, ist in einer Ausführungsform der Erfindung vorgesehen, dass jedes Bodenelement miteinander verbundene, insbesondere verschweißte, Träger umfasst. Die gewünschte hohe Festigkeit und Steifigkeit erreicht man insbesondere, wenn zumindest einige der Träger als H-Träger oder T-Träger ausgebildet sind.

Die Festigkeit und Steifigkeit der Bodenelemente kann weiter erhöht werden, wenn die Bodenelemente Deckplatten und/oder Grundplatten aufweisen, die mit zumindest einigen der Träger verbunden sind. Um das Gewicht der Bodenelemente gering zu halten, können die Deckplatten und/oder Grundplatten Ausnehmungen aufweisen. Diese Ausnehmungen erleichtern auch die Zugänglichkeit zu den Seitenwänden der Bodenelemente, um benachbart angeordnete Bodenelemente an ihren einander zugewandten Seitenwänden miteinander zu verbinden. Es ist weiters zweckmäßig, wenn die Deckplatten und/oder Grundplatten die Verankerungsvorrichtungen für einen Kranturm aufweisen.

Um das erfindungsgemäße mobile Fundament für Turmdrehkrane und Schnellbaukrane trotz seines vergleichsweise geringen Gewichts ausreichend stabil gegenüber Windlasten und Kran-Nutzlasten zu machen, die auf einen am Fundament montierten Kran einwirken, sieht die Erfindung vor, dass das mobile Fundament transportable Ballastgewichte und zumindest eine Auflagefläche für die transportablen Ballastgewichte aufweist. Die Ballastgewichte können mit dem LKW zur Baustelle gebracht und vor Ort auf die Auflagefläche des mobilen Fundaments aufgelegt werden, wodurch ein einfacher Aufbau und Abbau des mobilen Fundaments gewährleistet ist.

Um Gehsteige einerseits als Auflagefläche für das mobile Fundament für Turmdrehkrane und Schnellbaukrane zu nutzen und andererseits diese Gehsteige weiterhin für den Fußgängerverkehr offen zu halten, ist in einer bevorzugten Ausführungsform der Erfindung ein Durchgangselement mit Stehern und/oder Seitenwänden vorgesehen, wobei die lichte Höhe zwischen den Stehern bzw. Seitenwänden eine Höhe von zumindest 2,1 m, vorzugsweise von zumindest 2,3 m, aufweist, wobei das Durchgangselement mit den Bodenelementen lösbar verbindbar, insbesondere verschraubbar ist. Um das Durchgangselement möglichst steif und fest auszubilden, ist vorgesehen, dass das Durchgangselement die Steher an ihrem oberen Ende miteinander verbindende Träger aufweist, wobei die Träger eine Auflage für transportable Ballastgewichte bilden. Um das Durchgangselement durchschreitende Fußgänger vor herabfallenden Teilen, Schmutz oder Regenwasser zu schützen, ist es zweckmäßig, wenn die Steher an ihrem oberen Ende eine Deckplatte tragen, wobei die Deckplatte eine Auflage für transportable Ballastgewichte bildet. Die Deckplatte kann direkt mit den Stehern verbunden sein, oder mit den genannten Trägern. Die Deckplatte kann auch zur konstruktiven Steifigkeit und Festigkeit des Durchgangselements beitragen. Als Alternative zur Deckplatte können auch die auf das Durchgangselement aufgelegten Ballastgewichte Schutz für Fußgänger bieten.

Damit das Durchgangselement praktisch nutzbar ist, sollte die Höhe der Bodenelemente möglichst gering sein. Die Erfindung sieht daher in einer Ausführungsform vor, dass Bodenelemente des Fundaments eine Höhe von maximal 70 cm, vorzugsweise von maximal 50 cm, noch bevorzugter von maximal 40 cm, aufweisen. Zusätzlich ist es zweckmäßig, wenn das Fundament mit den Bodenelementen im Bereich des Durchgangselements lösbar verbindbare Rampenelemente aufweist, deren Breite zumindest der lichten Breite des Durchgangselements entspricht. Durch diese Maßnahme ist das Durchgangselement stufenlos benutzbar. Alternativ zu Rampenelementen können auch Treppenelemente zur Überbrückung des Höhenunterschieds zwischen dem Untergrund und dem Boden des Durchgangselements vorgesehen sein.

Bevorzugt bestehen die Bodenelemente und das Durchgangselement aus Stahl.

Für rasche und sichere Montage eines Kranturms am erfindungsgemäßen mobilen Fundament für Turmdrehkrane und Schnellbaukrane ist es zweckmäßig, wenn die Verankerungsvorrichtungen für den Kranturm Durchgangslöcher oder Gewindelöcher in den Bodenelementen und gegebenenfalls mechanische Sicherungen gegen Herausdrehen von Muttern, oder an den Bodenelementen befestigte Halteelemente, insbesondere Klammern, umfassen.

Die Erfindung wird nun anhand eines Ausführungsbeispiels unter Bezugnahme auf die Zeichnungen näher erläutert. In den Zeichnungen zeigen:
Fig. 1 und Fig. 2 schematische perspektivische Ansichten der wesentlichen Bestandteile des erfindungsgemäßen mobilen Fundaments für Turmdrehkrane und Schnellbaukrane;
Fig. 3 und Fig. 4 schematische perspektivische Ansichten des erfindungsgemäßen mobilen Fundaments für Turmdrehkrane und Schnellbaukrane im zusammengebauten Zustand.

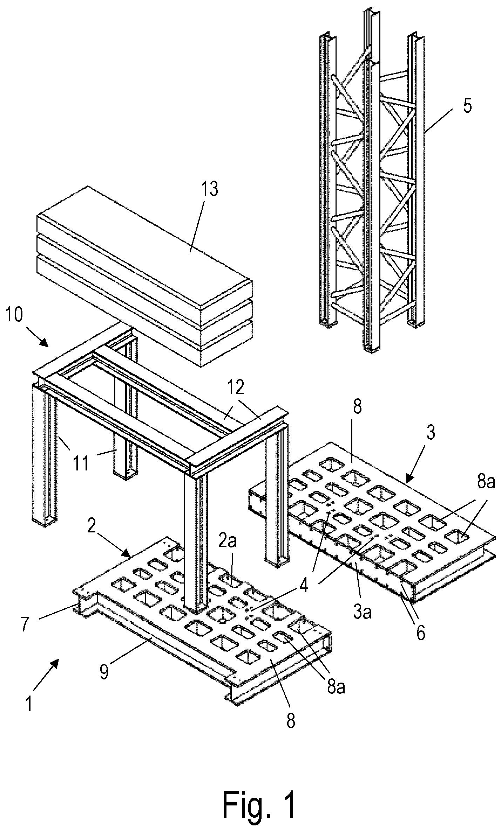

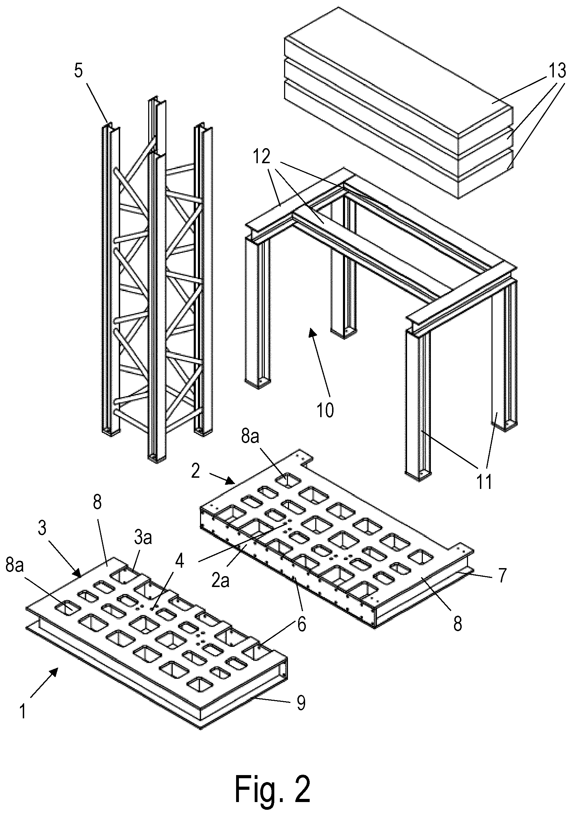

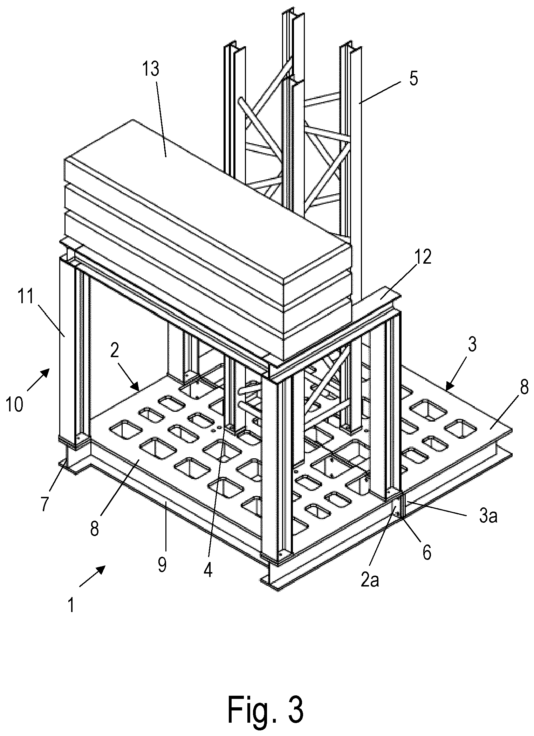

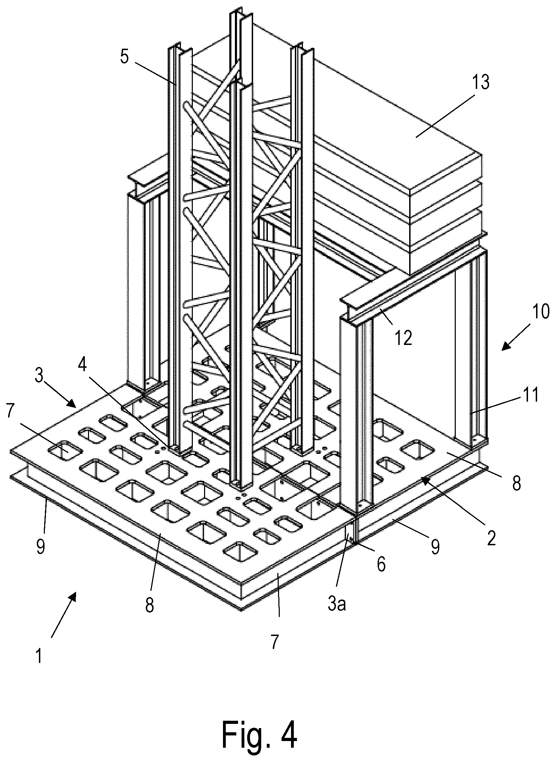

Das in den Figuren 1 bis 4 dargestellte Ausführungsbeispiel des erfindungsgemäßen mobilen Fundaments für Turmdrehkrane und Schnellbaukrane umfasst zwei Bodenelemente 2, 3 aus Metall, die miteinander lösbar verbindbar, insbesondere miteinander verschraubbar sind. Die Bodenelemente weisen Verankerungsvorrichtungen 4 für einen Kranturm 5 auf. Die Verankerungsvorrichtungen 4 für den Kranturm 5 sind als Durchgangslöcher, optional mit mechanischen Sicherungen gegen Herausdrehen von Muttern ausgebildet, können alternativ dazu jedoch auch an den Bodenelementen 2, 3 befestigte Halteelemente, insbesondere Klammern, umfassen. Der Kranturm 5 ist nicht Bestandteil der vorliegenden Erfindung, sondern Bestandteil eines Turmdrehkranes oder Schnellbaukranes, für den das mobile Fundament 1 ein temporäres Fundament bildet.

Die Bodenelemente 2, 3 weisen Seitenwände 2a, 3a auf, an denen sie miteinander verbindbar sind. Dazu sind in den Seitenwänden 2a, 3a Durchgangslöcher 6 vorgesehen, wobei die Positionen der Durchgangslöcher 6 in den Seitenwänden 2a, 3a der Bodenelemente 2, 3 einander entsprechen, sodass bei Seite-an-Seite-Anordnung der Seitenwände 2a, 3a der Bodenelemente 2, 3 die Durchgangslöcher 6 miteinander in Ausrichtung bringbar sind, um anschließend die Seitenwände 2a, 3a mit durch die Durchgangslöcher 6 hindurchgeführten Schrauben oder Bolzen lösbar miteinander zu verbinden. Die Bodenelemente 2, 3 umfassen miteinander verbundene, insbesondere verschweißte, Träger 7. Zumindest einige der Träger 7 können als H-Träger oder T-Träger ausgebildet sein. Weiters weisen die Bodenelemente 2, 3 Deckplatten 8 und Grundplatten 9 auf, die mit zumindest einigen der Träger 7 verbunden sind. Anstelle der Ausbildung von H-Trägern oder T-Trägern können die Deckplatten 8 und Grundplatten 9 mit vertikal angeordneten Platten oder I-Trägern verschweißt sein. Zur Gewichtseinsparung weisen die Deckplatten 8 Ausnehmungen 8a auf. Die Verankerungsvorrichtungen 4 für den Kranturm 5 sind in den Deckplatten 8 ausgebildet. Dadurch ergibt sich eine gleichmäßige Verteilung der vom Kranturm 5 in das Fundament 1 eingeleiteten Kräfte auf den Untergrund.

Weiters umfasst das mobile Fundament 1 für Turmdrehkrane und Schnellbaukrane ein Durchgangselement 10 mit vertikalen Stehern 11. Als Alternative oder ergänzend zu den Stehern 11 kann das Durchgangselemente 10 mit (in den Zeichnungen nicht dargestellten) Seitenwänden ausgebildet sein. Die lichte Höhe zwischen den Stehern 11 bzw. Seitenwänden beträgt zumindest 2,1 m, vorzugsweise zumindest 2,3 m. Die Steher 11 sind an ihrem oberen Ende miteinander mit Trägern 12, z.B. H-Träger, verbunden. Zur Erhöhung der Festigkeit und Stabilität können zusätzlich, in der Zeichnung nicht dargestellte, Verstrebungen vorgesehen werden. Die Träger 12 bilden eine Auflage für transportable, wiederverwendbare Ballastgewichte 13, die zur Beschwerung des mobilen Fundaments 1 dienen. Ergänzend oder alternativ dazu können Ballastgewichte 13 auch auf den Bodenelementen 2, 3, insbesondere den Deckplatten 8 aufgelegt werden. Die Stabilität des Kranes auf dem Fundament 1 wird durch diese wiederverwendbaren Ballastelemente 13 gewährleistet.

Das Durchgangselement 10 ist mit dem Bodenelement 2 verschraubbar. Damit das Durchgangselement 10 ohne Mühe von Fußgängern durchschritten werden kann, sind die Bodenelemente 2, 3 mit einer Höhe von maximal 50 cm, vorzugsweise von maximal 40 cm, ausgebildet. Um das Durchgangselement 10 auch für Kinderwagen, Rollstühle etc. benutzbar zu machen, ist eine stufenlose Befahrbarkeit vorgesehen, indem das Fundament 1 seitlich von den Bodenelementen 2, 3 mit im Bereich des Durchgangselements 10 angeordneten, in den Zeichnungen nicht dargestellten, Rampenelementen versehen ist. Die Breite der Rampenelemente soll zumindest so groß sein wie die lichte Breite des Durchgangselements 10.

Bevorzugt bestehen die Bodenelemente 2, 3 und die Bestandteile des Durchgangselements 10 aus Stahlteilen in der erforderlichen Güte.

## Patentansprüche

1. Mobiles Fundament (1) für Turmdrehkrane und Schnellbaukrane, das zumindest zwei Bodenelemente (2, 3) aus Metall aufweist, die nebeneinander Seite-an-Seite anordenbar und miteinander lösbar verbindbar, insbesondere miteinander verschraubbar, sind, wobei die Bodenelemente (2, 3) Verankerungsvorrichtungen (4) für einen Kranturm (5) aufweisen, **dadurch gekennzeichnet, dass** die Bodenelemente (2, 3) an ihren Seitenwänden (2a, 3a) miteinander verbindbar sind, indem die Seitenwände (2a, 3a) Durchgangslöcher (6) für Schrauben aufweisen, wobei die Positionen der Durchgangslöcher (6) in den Seitenwänden (2a, 3a) der Bodenelemente (2, 3) einander entsprechen und somit bei Seite-an-Seite-Anordnung der Bodenelemente (2, 3) miteinander in Ausrichtung bringbar und mittels durch die ausgerichteten Durchgangslöcher (6) hindurchgeführter Schrauben direkt miteinander verbindbar sind, wobei jedes Bodenelement (2, 3) miteinander verbundene, insbesondere verschweißte, Träger (7) und Deckplatten (8) und/oder Grundplatten (9) aufweist, die mit zumindest einigen der Träger (7) verbunden sind.

2. Mobiles Fundament für Turmdrehkrane und Schnellbaukrane nach Anspruch 1, **dadurch gekennzeichnet, dass** zumindest einige der Träger (7) als H-Träger oder T-Träger ausgebildet sind.

3. Mobiles Fundament für Turmdrehkrane und Schnellbaukrane nach Anspruch 1 oder 2, **dadurch gekennzeichnet, dass** die Deckplatten (8) und/oder Grundplatten (9) sich im Wesentlichen über das gesamte Bodenelement (2, 3) erstrecken.

4. Mobiles Fundament für Turmdrehkrane und Schnellbaukrane nach einem der Ansprüche 1 bis 3, **dadurch gekennzeichnet, dass** die Deckplatten (8) und/oder Grundplatten (9) Ausnehmungen (8a) aufweisen.

5. Mobiles Fundament für Turmdrehkrane und Schnellbaukrane nach einem der Ansprüche 1 bis 4, **dadurch gekennzeichnet, dass** die Deckplatten (8) und/oder Grundplatten (9) die Verankerungsvorrichtungen (4) für einen Kranturm (5) aufweisen.

6. Mobiles Fundament für Turmdrehkrane und Schnellbaukrane nach einem der vorhergehenden Ansprüche, **dadurch gekennzeichnet, dass** das mobile Fundament (1) transportable Ballastgewichte (13) und zumindest eine Auflagefläche für die transportablen Ballastgewichte (13) aufweist.

7. Mobiles Fundament für Turmdrehkrane und Schnellbaukrane nach einem der vorhergehenden Ansprüche, **dadurch gekennzeichnet, dass** ein Durchgangselement (10) als Passage für den Fußgängerverkehr, die die Fußgänger vor herabfallenden Teilen, Schmutz oder Regenwasser schützt, und als Auflage für die transportablen Ballastgewichte (13) mit Stehern (11) und/oder Seitenwänden vorgesehen ist, wobei die lichte Höhe zwischen den Stehern (11) bzw. Seitenwänden eine Höhe von zumindest 2,1 m, vorzugsweise von zumindest 2,3 m, aufweist, wobei das Durchgangselement (10) mit den Bodenelementen (2, 3) lösbar verbindbar, insbesondere verschraubbar ist.

8. Mobiles Fundament für Turmdrehkrane und Schnellbaukrane nach Anspruch 7, **dadurch gekennzeichnet, dass** das Durchgangselement (10) die Steher (11) an ihrem oberen Ende miteinander verbindende Träger (12) und optional zusätzliche Verstrebungen aufweist, wobei die Träger (12) eine Auflage für transportable Ballastgewichte (13) bilden.

9. Mobiles Fundament für Turmdrehkrane und Schnellbaukrane nach Anspruch 7 oder 8, **dadurch gekennzeichnet, dass** die Steher (11) an ihrem oberen Ende eine Deckplatte tragen, wobei die Deckplatte eine Auflage für transportable Ballastgewichte (13) bildet.

10. Mobiles Fundament für Turmdrehkrane und Schnellbaukrane nach einem der vorhergehenden Ansprüche, **dadurch gekennzeichnet, dass** Bodenelemente (2, 3) eine Höhe von maximal 70 cm, vorzugsweise von maximal 50 cm, noch bevorzugter von maximal 40 cm, aufweisen.

11. Mobiles Fundament für Turmdrehkrane und Schnellbaukrane nach einem der Ansprüche 7 bis 10, **dadurch gekennzeichnet, dass** das Fundament (1) mit den Bodenelementen (2, 3) im Bereich des Durchgangselements (10) lösbar verbindbare Rampen- oder Treppenelemente aufweist, deren Breite zumindest der lichten Breite des Durchgangselements (10) entspricht.

12. Mobiles Fundament für Turmdrehkrane und Schnellbaukrane nach einem der vorhergehenden Ansprüche, **dadurch gekennzeichnet, dass** die Bodenelemente (2, 3) aus Stahl bestehen.

13. Mobiles Fundament für Turmdrehkrane und Schnellbaukrane nach einem der Ansprüche 7 bis 12, **dadurch gekennzeichnet, dass** das Durchgangselement (10) aus Stahl besteht.

14. Mobiles Fundament für Turmdrehkrane und Schnellbaukrane nach einem der vorhergehenden Ansprüche, **dadurch gekennzeichnet, dass** die Verankerungsvorrichtungen (4) für den Kranturm (5) Durchgangslöcher oder Gewindelöcher in den Bodenelementen (2, 3) und gegebenenfalls mechanische Sicherungen gegen Herausdrehen von Muttern, oder an den Bodenelementen (2, 3) befestigte Halteelemente, insbesondere Klammern, umfassen.

15. Mobiles Fundament für Turmdrehkrane und Schnellbaukrane nach einem der vorhergehenden Ansprüche, **dadurch gekennzeichnet, dass** die Bodenelemente (2) einlagig Seite an Seite aufgelegt das Fundament bilden.

## Claims

1. Mobile foundation (1) for tower cranes and fast construction cranes, which has at least two base elements (2, 3) made of metal which can be arranged side-by-side and can be releasably connected to one another, in particular can be screwed together, the base elements (2, 3) have anchoring devices (4) for a crane tower (5), **characterised in that** the base elements (2, 3) can be connected to one another at their side walls (2a, 3a) by the side walls (2a, 3a) having through-holes (6) for screws, wherein the positions of the through-holes (6) in the side walls (2a, 3a) of the base elements (2, 3) correspond to one another and can thus be brought into alignment with one another when the base elements (2, 3) are arranged side-by-side and can be connected directly to one another by means of screws passed through the aligned through-holes (6), wherein each base element (2, 3) has interconnected, in particular welded, beams (7) and cover plates (8) and/or base plates (9) which are connected to at least some of the beams (7).

2. Mobile foundation for tower cranes and fast construction cranes according to claim 1, **characterised in that** at least some of the beams (7) are designed as H-beams or T-beams.

3. Mobile foundation for tower cranes and fast construction cranes according to claim 1 or 2, **characterised in that** the cover plates (8) and/or base plates (9) extend essentially over the entire base element (2, 3).

4. Mobile foundation for tower cranes and fast construction cranes according to any one of claims 1 to 3, **characterised in that** the cover plates (8) and/or base plates (9) have recesses (8a).

5. Mobile foundation for tower cranes and fast construction cranes according to any one of claims 1 to 4, **characterised in that** the cover plates (8) and/or base plates (9) have the anchoring devices (4) for a crane tower (5).

6. Mobile foundation for tower cranes and fast construction cranes according to any one of the preceding claims, **characterised in that** the mobile foundation (1) has transportable ballast weights (13) and at least one support surface for the transportable ballast weights (13).

7. Mobile foundation for tower cranes and fast construction cranes according to any one of the preceding claims, **characterised in that** a passageway element (10) is provided as a passageway for pedestrian traffic, which protects the pedestrians from falling parts, dirt or rainwater, and as a support for the transportable ballast weights (13) with uprights (11) and/or side walls, wherein the clear height between the uprights (11) or side walls has a height of at least 2.1 m, preferably of at least 2.3 m, wherein the passageway element (10) is detachably connectable to the floor elements (2, 3), in particular screwable to the floor elements (2, 3).

8. Mobile foundation for tower cranes and fast construction cranes according to claim 7, **characterised in that** the passageway element (10) has beams (12) connecting the uprights (11) to one another at their upper end and optionally additional struts, the beams (12) forming a support for transportable ballast weights (13).

9. Mobile foundation for tower cranes and fast construction cranes according to claim 7 or 8, **characterised in that** the uprights (11) carry a cover plate at their upper end, the cover plate forming a support for transportable ballast weights (13).

10. Mobile foundation for tower cranes and fast construction cranes according to any one of the preceding claims, **characterised in that** base elements (2, 3) have a maximum height of 70 cm, preferably a maximum height of 50 cm, even more preferably a maximum height of 40 cm.

11. Mobile foundation for tower cranes and fast construction cranes according to any one of claims 7 to 10, **characterised in that** the foundation (1) has ramp or stair elements which can be detachably connected to the floor elements (2, 3) in the region of the passageway element (10) and the width of which corresponds at least to the clear width of the passageway element (10).

12. Mobile foundation for tower cranes and fast construction cranes according to any one of the preceding claims, **characterised in that** the base elements (2, 3) are made of steel.

13. Mobile foundation for tower cranes and fast construction cranes according to any one of claims 7 to 12, **characterised in that** the passageway element (10) is made of steel.

14. Mobile foundation for tower cranes and fast construction cranes according to any one of the preceding claims, **characterised in that** the anchoring devices (4) for the crane tower (5) comprise through-holes or threaded holes in the base elements (2, 3) and, if appropriate, mechanical securing devices to prevent nuts from being unscrewed, or retaining elements, in particular clamps, fastened to the base elements (2, 3).

15. Mobile foundation for tower cranes and fast construction cranes according to any one of the preceding claims, **characterised in that** the floor elements (2) form the foundation when laid side by side in a single layer.

## Revendications

1. Fondation mobile (1) pour grues à tour et grues à construction rapide, comportant au moins deux éléments de fond (2, 3) en métal qui peuvent être disposés parallèlement côte à côte et qui peuvent être reliés entre eux de façon amovible, qui peuvent en particulier être vissés entre eux, les éléments de fond (2, 3) comportant des dispositifs d'ancrage (4) pour une tour de grue (5), **caractérisée en ce que** les éléments de fond (2, 3) peuvent être reliés entre eux sur leurs parois latérales (2a, 3a) grâce à les parois latérales (2a, 3a) ayant des trous traversants (6) pour vis, les positions des trous traversants (6) dans les parois latérales (2a, 3a) des éléments de fond (2, 3) se correspondant et ainsi, lorsque les éléments de fond (2, 3) sont disposés côte à côte, elles peuvent être alignées entre elles et peuvent être reliées directement entre elles par des vis qui sont passées à travers les trous traversants (6) alignés, chaque élément de fond (2, 3) comportant des supports (7) interconnectés, en particulier soudés, et des plaques de recouvrement (8) et/ou des plaques de base (9) qui sont reliées à au moins certains des supports (7).

2. Fondation mobile pour grues à tour et grues à construction rapide selon la revendication 1, **caractérisée en ce qu'**au moins certains des supports (7) sont conçus comme des supports en H ou des supports en T.

3. Fondation mobile pour grues à tour et grues à construction rapide selon la revendication 1 ou 2, **caractérisée en ce que** les plaques de recouvrement (8) et/ou les plaques de base (9) s'étendent sensiblement sur tout l'élément de fond (2, 3).

4. Fondation mobile pour grues à tour et grues à construction rapide selon l'une des revendications 1 à 3, **caractérisée en ce que** les plaques de recouvrement (8) et/ou les plaques de base (9) présentent des évidements (8a).

5. Fondation mobile pour grues à tour et grues à construction rapide selon l'une des revendications 1 à 4, **caractérisée en ce que** les plaques de recouvrement (8) et/ou les plaques de base (9) comportent les dispositifs d'ancrage (4) pour une tour de grue (5).

6. Fondation mobile pour grues à tour et grues à construction rapide selon l'une des revendications précédentes, **caractérisée en ce que** la fondation mobile (1) présente des poids du lest transportables (13) et au moins une surface d'appui pour les poids du lest transportables (13).

7. Fondation mobile pour grues à tour et grues à construction rapide selon l'une des revendications précédentes, **caractérisée en ce qu'**un élément de passage (10) est prévu comme passage pour la circulation piétonne, qui protège les piétons contre les chutes de pièces, la saleté ou l'eau de pluie, et comme appui pour les poids du lest transportables (13) avec des montants (11) et/ou des parois latérales, la hauteur libre entre les montants (11) ou, respectivement, les parois latérales ayant une hauteur d'au moins 2,1 m, de préférence d'au moins 2,3 m, l'élément de passage (10) pouvant être relié de manière amovible, en particulier pouvant être vissé, aux éléments de fond (2, 3).

8. Fondation mobile pour grues à tour et grues à construction rapide selon la revendication 7, **caractérisée en ce que** l'élément de passage (10) comporte des supports (12) reliant les montants (11) entre eux à leur extrémité supérieure et éventuellement des entretoises supplémentaires, les supports (12) formant un appui pour des poids du lest transportables (13).

9. Fondation mobile pour grues à tour et grues à construction rapide selon la revendication 7 ou 8, **caractérisée en ce que** les montants (11) portent à leur extrémité supérieure une plaque de recouvrement, la plaque de recouvrement formant un appui pour des poids du lest transportables (13).

10. Fondation mobile pour grues à tour et grues à construction rapide selon l'une des revendications précédentes, **caractérisée en ce que** les éléments de fond (2, 3) ont une hauteur maximale de 70 cm, de préférence une hauteur maximale de 50 cm, plus préférablement une hauteur maximale de 40 cm.

11. Fondation mobile pour grues à tour et grues à construction rapide selon l'une des revendications 7 à 10, **caractérisée en ce que** la fondation (1) comporte des éléments de rampe ou d'escalier pouvant être reliés de manière amovible aux éléments de fond (2, 3) dans la zone de l'élément de passage (10), la largeur des éléments de rampe ou d'escalier correspondant au moins à la largeur libre de l'élément de passage (10).

12. Fondation mobile pour grues à tour et grues à construction rapide selon l'une des revendications précédentes, **caractérisée en ce que** les éléments de fond (2, 3) sont faits d'acier.

13. Fondation mobile pour grues à tour et grues à construction rapide selon l'une des revendications 7 à 12, **caractérisée en ce que** l'élément de passage (10) est fait d'acier.

14. Fondation mobile pour grues à tour et grues à construction rapide selon l'une des revendications précédentes, **caractérisée en ce que** les dispositifs d'ancrage (4) pour la tour de grue (5) comprennent des trous traversants ou des trous filetés dans les éléments de fond (2, 3) et, le cas échéant, des sécurités mécaniques contre le dévissage d'écrous, ou des éléments de maintien, en particulier des clips, fixés aux éléments de fond (2, 3).

15. Fondation mobile pour grues à tour et grues à construction rapide selon l'une des revendications précédentes, **caractérisée en ce que** les éléments de fond (2) forment la fondation lorsqu'ils sont posés côte à côte en une seule couche.
